Europäisches Patentamt

European Patent Office

Office européen des brevets

(19)

(11) EP 0 945 956 A2

(12) **EUROPÄISCHE PATENTANMELDUNG**

(43) Veröffentlichungstag:
29.09.1999 Patentblatt 1999/39

(51) Int Cl.⁶: **H02J 3/18**

(21) Anmeldenummer: 99105991.6

(22) Anmeldetag: 25.03.1999

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **26.03.1998 DE 19813363**

(71) Anmelder: **ABB Daimler-Benz Transportation (Technology) GmbH**
**13627 Berlin (DE)**

(72) Erfinder:
- **Krafka, Peter Dr.-Ing.**
  **69198 Schriesheim (DE)**
- **Rampe, Michael Dipl.-Ing.**
  **68535 Edingen-Neckarshausen (DE)**
- **Becker, Robert Dipl.-Ing.**
  **76684 Östringen (DE)**

(74) Vertreter: **Luderschmidt, Schüler & Partner GbR Patentanwälte,**
**John-F.-Kennedy-Strasse 4**
**65189 Wiesbaden (DE)**

(54) **Verfahren zur indirekten Bestimmung der Ausgangsspannung eines Zweipunkt-Wechselrichters**

(57) Es wird ein Verfahren zur indirekten Bestimmung der Ausgangsspannung eines über einen Gleichspannungszwischenkreis gespeisten und eine Induktionsmaschine versorgenden Wechselrichters mit folgenden Merkmalen vorgeschlagen:

- in einem ersten Schritt werden der Wechselrichterschaltzustand, die augenblicklichen Ständerphasenströme $(ia(\nu), ib(\nu), ic(\nu))$, der Mittelwert der Zwischenkreisspannung $(\bar{U}d(\nu,\nu-1))$ und die augenblickliche Dauer des EIN-Zustandes der Wechselrichter-Schaltbefehle $(SC\_Tx$ mit $x=1, 2, 3)$ über die letzte Abtastzeit erfaßt,
- in einem zweiten Schritt erfolgt eine Bestimmung der idealen Wechselrichter-Ausgangsspannung aus der Dauer der Wechselrichter-Schaltbefehle,

wobei die Wechselrichter-Schaltbefehle um die spannungsabhängigen und/oder stromabhängigen Kommutierungsverzugszeiten (txds_ON, txds_OFF) korrigiert werden, was in Abhängigkeit davon erfolgt, ob es sich um einen Ein- oder Ausschaltvorgang handelt und ob zum Schaltaugenblick positive oder negative Strompolarität vorliegt,

- in einem dritten Schritt werden zur Ermittlung der realen Wechselrichter-Ausgangsspannung die Spannungsabfälle der Halbleiterventile des Wechselrichters berücksichtigt,
- in einem vierten Schritt erfolgt eine Raumzeiger-Transformation der realen Wechselrichter-Ausgangsspannungen zum Ständerspannungsraumzeiger $(\underline{u}s(\nu))$.

Fig. 1a

## Beschreibung

Die Erfindung bezieht sich auf ein Verfahren zur indirekten Bestimmung der Ausgangsspannung eines Zweipunkt-Wechselrichters gemäß dem Oberbegriff des Anspruchs 1.

Die Erfindung kann sowohl bei mit GTOs (Gate Turn-Off Thyristoren) als auch bei mit IGBTs (Integrated-Gate-Bipolar-Transistoren) bestückten Zweipunkt-Wechselrichtern verwendet werden. Beim grundsätzlichen Verfahren ohne zusätzliche Störgrößenaufschaltung können alle bekannten Regelverfahren für die Bildung der Wechselrichter-Schaltbefehle verwendet werden, beispielsweise DSR (Direkte-Selbst-Regelung), DTC (Direct-Torque-Control) sowie mittelwertbasierende Verfahren mit PWM (Puls-Weiten-Modulation), wie indirekte Stromregelungen FOR (Feldorientierte Regelung bzw. rotorflußorientierte Zweikomponenten-Stromregelung oder indirekte Drehmoment-/Flußregelungen, wie ISR (Indirekte-Selbst-Regelung)). Die Verfahren mit zusätzlicher Störgrößenaufschaltung sind auf Regel- oder Steuerverfahren mit PWM beschränkt.

Aus N. Mutoh, K. Nandoh und A. Ueda "Automatic Torque Boost Control Method Suitable for PWM Inverter with a High Switching Frequency" in IEEE Transactions on Industrial Electronics, Vol. 39, No. 3, June 1992, Seite 250 bis 257 ist eine Drehmomentregelung für pulsweitenmodulierte Wechselrichter bekannt, bei der die Wechselrichter-Schaltbefehle in Abhängigkeit der dem Ausgang des Wechselrichters entnehmbaren Polaritäten der Phasenspannungen für die Induktionsmaschine korrigiert werden. Dabei ist eine direkte Messung der Polaritäten der Phasenspannungen am Ausgang des Wechselrichters notwendig. Eine indirekte Nachbildung der Wechselrichter-Phasenspannungen mit Hilfe eines Wechselrichter-Modells ist mit Fehlern behaftet, da die Ventile des Wechselrichters nicht ideal schalten, sondern Nichtlinearitäten aufgrund auftretender Verzögerungen entstehen.

Aus der EP 0711471 B1 ist ein Verfahren zur Kompensation einer Fehlerspannung eines eine Induktionsmaschine speisenden Pulswechselrichters bekannt, wobei diese Fehlerspannung auf eine Verriegelungszeit und auf Durchlaßspannungen von Stromrichterventilen dieses Pulswechselrichters zurückzuführen ist. Da die Fehlerspannung von der Richtung des Phasenstromes abhängig ist, wird zunächst die Lage des Strom-Raumzeigers der Induktionsmaschine ermittelt, das heißt, es werden der Lastwinkel, der den Winkel zwischen dem Strom-Raumzeiger und dem Fluß-Raumzeiger angibt, und der Stromsektor, in dem sich der Strom-Raumzeiger momentan aufhält, bestimmt. Dazu werden die Stromkomponenten eines vorgebbaren Sollstrom-Raumzeigers verwendet, die bei einer Zweikomponenten-Stromregelung vorhanden sind. Der Betrag dieser Fehlerspannung, der unabhängig vom Betrag des Sollstrom-Raumzeigers ist, wird berechnet aus den Parametern des Pulswechselrichters: Verriegelungszeit, Eingangsspannung des Pulswechselrichters, Pulsfrequenz und Schleusenspannung der Stromrichterventile des Pulswechselrichters. Mittels der Bestimmung der Stromvektoren ist der Winkel bzw. Lage des Fehlerspannungs-Raumzeigers im ständerfesten Koordinatensystem bekannt. Um das Verfahren bei einer Zweikomponenten-Stromregelung mit einem Raumzeigermodulator zu verwenden, muß der Fehlerspannungszeiger, der im ständerfesten Koordinatensystem ermittelt wurde, in ein läuferflußfestes Koordinatensystem transformiert werden. Der Fehlerspannungszeiger im ständerfesten Koordinatensystem kann bei einer Regelung, die im ständerfesten Koordinatensystem arbeitet, auch direkt verwendet werden. Um die Auswirkungen der Fehlerspannung zu kompensieren, muß zum Sollwert des Raumzeigers der Ständerspannung der Zeiger der zu erwartenden Fehlerspannung addiert werden. Dies kann sowohl im feldorientierten oder ständerorientierten Koordinatensystem geschehen, als auch durch direkte Veränderung der Schaltgrenzen der symmetrischen Raumzeigermodulation.

Aus F. Hoffmann, Drehgeberlos geregelte Induktionsmaschinen an IGBT-Pulsstromrichtern, Fortschrittsberichte VDI, Reihe 21, Nr. 213, S. 13 bis 22 ist es bekannt, ein Wechselrichtermodell zur Modellierung des Schaltverhaltens des an einem Gleichspannungszwischenkreis betriebenen Wechselrichters zu verwenden. Unter der Annahme idealer Halbleiterventile ergibt sich der vom Modell zu bestimmende Ständerspannungsraumzeiger unter anderem in Abhängigkeit des sogenannten Schaltwortes und der Zwischenkreisspannung. Aufgrund der nicht idealen Ventileigenschaften müssen bei der Ermittlung des Ständerspannungsraumzeigers im Wechselrichtermodell jedoch zusätzlich die realen, die Ausgangsspannung des Wechselrichters verändernden Spannungsfälle im Wechselrichter berücksichtigt werden, was im bekannten Fall durch Modellierung innerhalb des Wechselrichtermodells erfolgt.

Der Erfindung liegt die Aufgabe zugrunde, ein Verfahren zur indirekten Bestimmung der Ausgangsspannung eines Zweipunkt-Wechselrichters der eingangs genannten Art anzugeben, mit dem der Ständerspannungsraumzeiger der an den Wechselrichter angeschlossenen Induktionsmaschine möglichst genau nachgebildet werden kann.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, daß durch die vorgeschlagene indirekte Bestimmung der Ausgangsspannung jeglicher spezieller Hardware-Aufwand für die Bestimmung der Ausgangsspannung des Wechselrichters entfällt. Der Ständerspannungsraumzeiger wird mit guter Genauigkeit nachgebildet. Die Oberschwingungsbelastung, insbesondere die 6. Harmonische im Drehmoment und im Zwischenkreis, wird reduziert. Vorteilhaft kann das erfindungsgemäße Verfahren für alle bekannten Regelverfahren für Induktionsmaschinen eingesetzt werden, gleichgültig, ob es sich um mittelwertbasierende Verfahren mit PWM (FOR, ISR) oder augenblickswertbasierende Verfahren (DSR, DTC, Hysteresestromregelung) handelt.

Die Erfindung wird nachstehend anhand der in der Zeichnung dargestellten Ausführungsbeispiele erläutert. Es zeigen:

Fig. 1a, b      Grundanordnungen der Regeleinrichtung,

Fig. 2      eine Anordnung mit präziser Berücksichtigung der Zwischenkreisspannung,

Fig. 3      eine Regeleinrichtung mit zusätzlicher Störgrößenaufschaltung,

Fig. 4      eine Regeleinrichtung mit präziser Berücksichtigung der Zwischenkreisspannung und zusätzlicher Störgrößenaufschaltung,

Fig. 5      die Beziehungen zwischen den Schaltbefehlen und der Wechselrichter-Ausgangsspannung bei positivem Phasenstrom,

Fig. 6      die Beziehungen zwischen den Schaltbefehlen und der Wechselrichter-Ausgangsspannung bei negativem Phasenstrom,

Fig. 7      eine Korrektur der Schaltbefehle bei zusätzlicher Störgrößenaufschaltung und positivem Phasenstrom,

Fig. 8      eine Korrektur der Schaltbefehle bei zusätzlicher Störgrößenaufschaltung und negativem Phasenstrom,

Fig. 9      eine typische Stromabhängigkeit der Ausschaltverzugszeit bei einem IGBT-Wechselrichter.

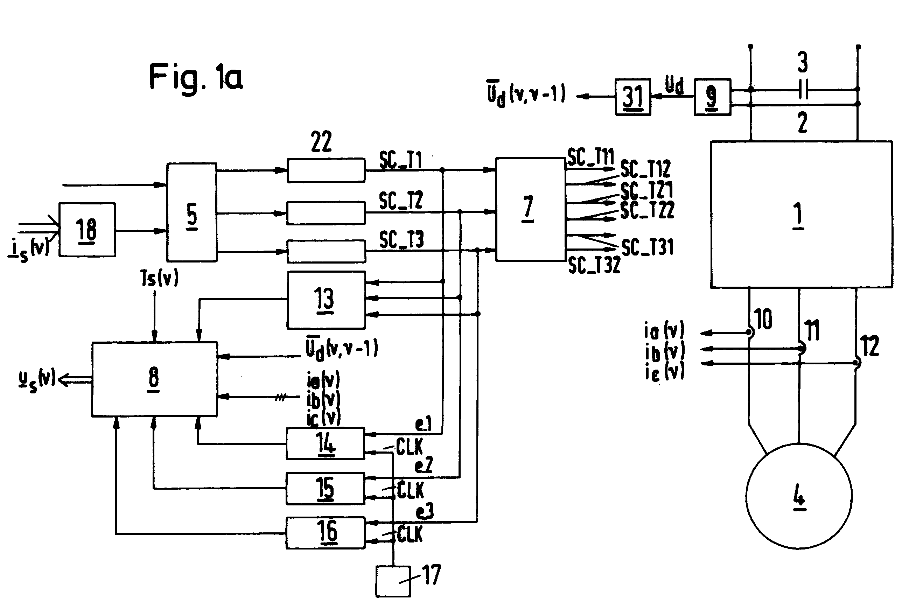

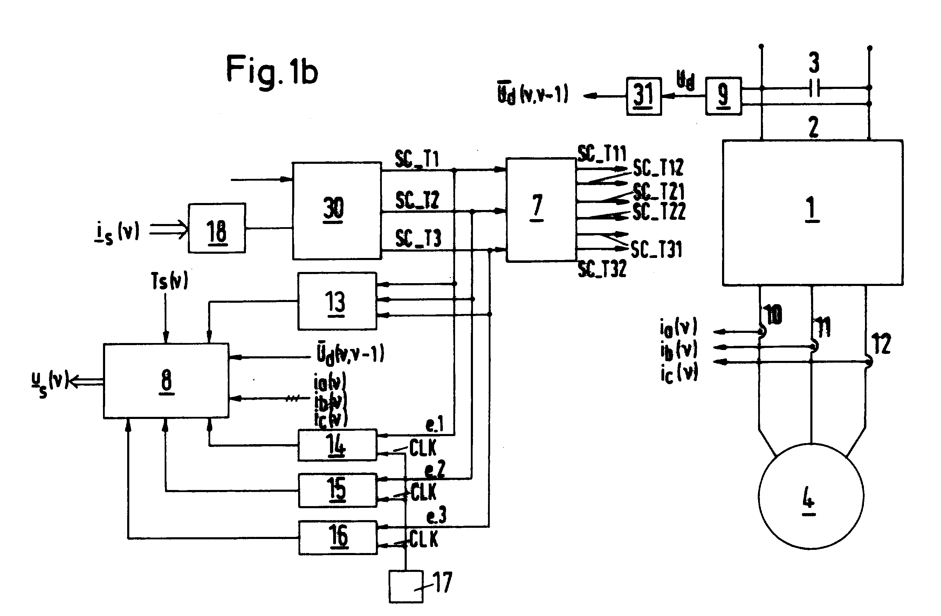

In den Fig. 1a und 1b sind Grundanordnungen der Regeleinrichtung für die Einstellung des gewünschten Drehmomentes und der gewünschten Drehzahl einer dreiphasigen Induktionsmaschine dargestellt. Es ist ein Wechselrichter 1 zu erkennen, der gleichspannungsseitig an einem Gleichspannungszwischenkreis 2 mit Zwischenkreiskondensator 3 liegt und drehspannungsseitig mit einer Induktionsmaschine 4 beschaltet ist. Als Halbleiterschalter können GTOs oder IGBTs verwendet werden.

Die Wechselrichter-Schaltbefehle SC_T11 bzw. SC_T12 für den oberen bzw. unteren Schalter der ersten Phase, SC_T21 bzw. SC_T22 für den oberen bzw. unteren Schalter der zweiten Phase und SC_T31 bzw. SC_T32 für den oberen bzw. unteren Schalter der dritten Phase werden mittels einer Schaltverriegelungslogik 7 aus den Wechselrichter-Schaltbefehlen SC_T1 bzw. SC_T2 bzw. SC_T3 (allgemein SC_Tx mit x=1, 2, 3) für die erste (x=1) bzw. zweite (x=2) bzw. dritte Phase (x=3) abgeleitet. Die Schaltbefehle SC_Tx können entweder von einem Pulsmustergenerator mit Zählervergleichseinheiten 22 ausgehend von einer mittelwertbasierenden Drehmoment/Flußregelung 5 erzeugt werden, wie in Fig. 1a dargestellt oder direkt von einem augenblickswertbasierenden Regelverfahren (beispielsweise DSR, DTC) vorgegeben werden, wie in Fig. 1b mit Drehmoment/Fluß-Regelung 30 gezeigt.

In den Fig. 1a und 1b ist ein Wechselrichtermodell 8 zu erkennen, das eingangsseitig den Mittelwert der Zwischenkreisspannung $\overline{U}d(v, v-1)$, die drei Ständerphasenströme $ia(v)$, $ib(v)$, $ic(v)$, die beispielsweise von einem Pulsweitenmodulator vorgegebene Abtastzeit $Ts(v)$ sowie nachstehend näher erläuterte Größen empfängt und ausgangsseitig den einem Flußbeobachter 18 zuzuleitenden Ständerspannungsraumzeiger $\underline{u}s(v)$ bildet. Der Mittelwert der Zwischenkreisspannung $\overline{U}d(v, v - 1)$ wird dabei unter Einsatz einer Spannungserfassungseinrichtung 9 mit nachgeschaltetem Mittelwertbildner 31 gebildet. Zur Erfassung der Ständerphasenströme $ia(v)$, $ib(v)$, $ic(v)$ sind Stromerfassungseinrichtungen 10, 11, 12 in den drei Phasen vorgesehen. Üblicherweise werden bei nicht angeschlossenem Sternpunkt der Induktionsmaschine nur zwei Phasenströme gemessen, der dritte Phasenstrom wird innerhalb der Signalverarbeitung (Hard- oder Software) aus der Stromsumme $ia+ib+ic=0$ nachgebildet. Mit $v$ ($v=1, 2, 3...$) werden die Abtastereignisse des zeitdiskret arbeitenden Wechselrichtermodells 8 und des Flußbeobachters 18 gekennzeichnet.

Im Falle der Ausführungsform gemäß Fig. 1a mit PWM sind die Abtastzeitpunkte $v$ mit der Pulsperiode Tp synchronisiert. Je nach Ausführungsform ist eine Überabtastung innerhalb einer Pulsperiode Tp (k-1, k) möglich, d.h. die Abtastfrequenz der Abtastzeitpunkte $v$ ist ein ganzzahliges Vielfaches der Pulsfrequenz und wird vom Pulsmustergenerator vorgegeben. Liegt keine Überabtastung vor, so gilt $v=k$.

Im Falle der Ausführungsform gemäß Fig. 1b sind die Abtastzeitpunkte $v$ äquidistant. Die Abtastzeit ist konstant und es gibt bedingt durch den Ansatz einer augenblickswertbasierenden Regelung (beispielsweise DSR oder DTC) keine feste Pulsperiode.

Die Wechselrichter-Schaltbefehle SC_T1, SC_T2, SC_T3 werden bei beiden Ausführungsformen gemäß Fig. 1a, 1b über ein binäres Eingaberegister 13 in das Wechselrichtermodell 8 eingelesen und dienen gleichzeitig als Enable-Signale e_1, e_2, e_3 für drei Zähler/Ausgaberegister 14, 15, 16. Den Eingängen dieser Zähler/Ausgaberegister liegen Taktpulse CLK eines Oszillators 17 fester Frequenz an. Die Ausgänge dieser Zähler/Ausgaberegister 14, 15, 16 sind an das Wechselrichtermodell 8 angeschlossen.

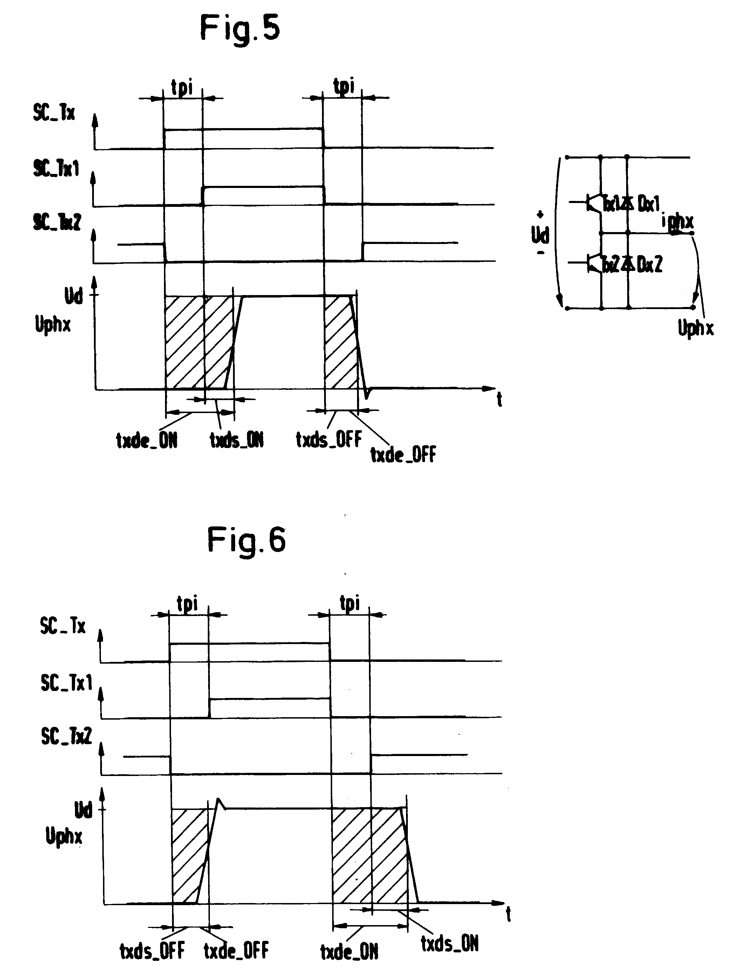

In Fig. 5 sind zur Erläuterung des erfindungsgemäßen Verfahrens die Beziehungen zwischen den Schaltbefehlen und der Wechselrichter-Ausgangsspannung bei positivem Phasenstrom dargestellt. Im rechten Abschnitt der Figur ist dabei eine Wechselrichterphase gezeigt, mit dem am positiven Pol des Gleichspannungszwischenkreises liegenden oberen Schalter Tx1, der hierzu parallelen Diode Dx1, mit dem am negativen Pol des Gleichspannungszwischenkreises liegenden unteren Schalter Tx2, der hierzu parallelen Diode Dx2, der Zwischenkreisspannung Ud, dem Wechselrichter-Phasenstrom iphx und der Wechselrichter-Ausgangsspannung uphx.

Im linken Abschnitt der Fig. 5 sind untereinander die zeitlichen Verläufe der Wechselrichter-Schaltbefehle SC_Tx für die Phase x, der Wechselrichter-Schaltbefehle SC_Tx1 für den oberen Schalter der Phase x, der Wechselrichter-Schaltbefehle SC_Tx2 für den unteren Schalter der Phase x und der Wechselrichter-Ausgangsspannung uphx dargestellt. Die zu Beginn und am Ende eines Wechsels des Schaltzustandes einzuhaltenden Wechselsperrzeiten tpi sind jeweils gezeigt. Es ergibt sich somit, daß die Anstiegsflanke von SC_Tx1 um tpi gegenüber der Anstiegsflanke von SC_Tx verzögert ist und daß die Anstiegsflanke von SC_Tx2 um tpi gegenüber der Abfallflanke von SC_Tx verzögert ist.

Wie aus dem zeitlichen Verlauf von uphx in Fig. 5 erkennbar ist, ergibt sich eine weitere Verzögerung der Anstiegsflanke der Wechselrichter-Ausgangsspannung uphx um die Einschaltverzugszeit txds_ON, so daß die Anstiegsflanke von uphx insgesamt um die Fehler-Verzögerungszeit txde_ON = tpi + txds_ON gegenüber der Anstiegsflanke von SC_Tx verzögert ist. Die sich bei der Abfallflanke von uphx gegenüber der Abfallflanke von SC_Tx einstellende Fehler-Verzögerungszeit txde_OFF entspricht der Ausschaltverzugszeit txds_OFF. Die sich beim Ein- und Ausschalten ergebenden Fehler-Spannungszeitflächen sind schraffiert gekennzeichnet.

In Fig. 6 sind die Beziehungen zwischen den Schaltbefehlen und der Wechselrichter-Ausgangsspannung bei negativem Phasenstrom dargestellt.

Im linken Abschnitt der Fig. 6 sind untereinander wiederum die zeitlichen Verläufe der Wechselrichter-Schaltbefehle SC_Tx für die Phase x, der Wechselrichter-Schaltbefehle SC_Tx1 für den oberen Schalter der Phase x, der Wechselrichter-Schaltbefehle SC_Tx2 für den unteren Schalter der Phase x und der Wechselrichter-Ausgangsspannung uphx dargestellt. Die zu Beginn und am Ende eines Wechsel des Schaltzustandes zu beachtenden Wechselsperrzeiten tpi sind jeweils gezeigt. Es ergibt sich somit wiederum, daß die Anstiegsflanke von SC_Tx1 um tpi gegenüber der Anstiegsflanke von SC_Tx verzögert ist und daß die Anstiegsflanke von SC_Tx2 um tpi gegenüber der Abfallflanke von SC_Tx verzögert ist.

Die sich bei der Anstiegsflanke von uphx gegenüber der Anstiegsflanke von SC_Tx einstellende Fehler-Verzögerungszeit txde_OFF entspricht der Ausschaltverzugszeit txds_OFF. Wie aus dem zeitlichen Verlauf von uphx in Fig. 6 erkennbar ist, ergibt sich eine weitere Verzögerung der Abfallflanke um die Einschaltverzugszeit txds_ON, so daß die Abfallflanke von uphx insgesamt um die Fehler-Verzögerungszeit txde_ON = tpi + txds_ON gegenüber der Abfallflanke von SC_Tx verzögert ist. Die sich beim Ein- und Ausschalten ergebenden Fehler-Spannungszeitflächen sind wiederum schraffiert gekennzeichnet.

Bei einer Schalthandlung pro Pulsperiode Tp ergibt sich für die zu den vorstehend bezeichneten Fehler-Spannungszeitflächen korrespondierenden Mittelwerte der Fehler-Wechselrichter-Ausgangsspannungen uphx_err bei Bezug auf eine Pulsperiode (Ts=Tp)

- beim Einschaltvorgang und positivem Phasenstrom (nachfolgend auch als Gleichung A bezeichnet):

$$u_{phx\_err} = -\left[\frac{(t_{pi} + t_{xds\_ON})}{T_s} \cdot \bar{U}_d\right] \quad (A)$$

- beim Einschaltvorgang mit negativem Phasenstrom (nachfolgend auch als Gleichung B bezeichnet):

$$u_{phx\_err} = -\left[\frac{t_{xds\_OFF}}{T_s} \cdot \bar{U}_d\right] \quad (B)$$

- beim Ausschaltvorgang mit positivem Phasenstrom (nachfolgend auch als Gleichung C bezeichnet):

$$u_{phx\_err} = +\left[\frac{t_{xds\_OFF}}{T_s} \cdot \bar{U}_d\right] \quad (C)$$

- und beim Ausschaltvorgang mit negativem Phasenstrom (nachfolgend auch als Gleichung D bezeichnet):

$$u_{phx\_err} = +\left[\frac{(t_{pi} + t_{xds\_ON})}{T_s} \cdot \bar{U}_d\right] \quad (D)$$

Bei Bezug auf eine Schaltperiode Tm=2Tp ergibt sich

- beim Ein- oder Ausschaltvorgang mit positivem Phasenstrom (nachfolgend auch als Gleichung E bezeichnet):

$$u_{phx\_err} = -\left[\frac{(t_{pi} + t_{xds\_ON} - t_{xds\_OFF})}{T_m} \cdot \bar{U}_d\right] \quad (E)$$

- und beim Ein- oder Ausschaltvorgang mit negativem Phasenstrom (nachfolgend auch als Gleichung F bezeichnet):

$$u_{phx\_err} = +\left[\frac{(t_{pi} + t_{xds\_ON} - t_{xds\_OFF})}{T_m} \cdot \bar{U}_d\right] \quad (F)$$

Wichtig bei den vorstehenden Betrachtungen ist die Tatsache, daß sowohl die Einschaltverzugszeit txds_ON als auch die Ausschaltverzugszeit txds_OFF von der Amplitude des momentanen Phasenstromes und gegebenenfalls von der als Kommutierungsspannung wirkenden Zwischenkreisspannung abhängig sind. Dabei ist der Mittelwert der Zwischenkreisspannung $\bar{U}$d während einer Pulsperiode von Wichtigkeit.

Bei zwei Schalthandlungen pro Pulsperiode Tp im Fall spezieller synchroner Pulsmuster ergibt sich

- beim Ein- oder Ausschaltvorgang mit positivem Phasenstrom (nachfolgend auch als Gleichung G bezeichnet):

$$u_{phx\_err} = -\left[\frac{(t_{pi} + t_{xds\_ON} - t_{xds\_OFF})}{T_p} \cdot \bar{U}_d\right] \quad (G)$$

- und beim Ein- oder Ausschaltvorgang mit negativem Phasenstrom (nachfolgend auch als Gleichung H bezeichnet):

$$u_{phx\_err} = +\left[\frac{(t_{pi} + t_{xds\_ON} - t_{xds\_OFF})}{T_p} \cdot \bar{U}_d\right] \quad (H)$$

Der Verfahrensablauf im einzelnen ist wie folgt:

In einem *ersten Schritt* erfolgt das Einlesen der Eingangsgrößen, wie des augenblicklichen Wechselrichterschaltzustandes (Eingaberegister 13) der augenblicklichen Ständerphasenströme ia(ν), ib(ν), ic(ν), des Mittelwertes

der Zwischenkreisspannung $\bar{U}d(\nu,\nu\text{-}1)$ und der augenblicklichen Zählerstände der Zähler/Ausgaberegister 14, 15, 16, welche die Dauer des EIN-Zustandes (log. 1) der Wechselrichter-Schaltbefehle SC_Tx über die letzte Abtastzeit $(\nu,\nu\text{-}1)$ angeben.

In einem *zweiten Schritt* erfolgt die Bestimmung der spannungsabhängigen und/oder stromabhängigen Kommutierungsverzugszeiten, d. h. der Einschaltverzugszeit txds_ON und der Ausschaltverzugszeit txds_OFF. Die Einschaltverzugszeit txds_ON und die Ausschaltverzugszeit txds_OFF werden durch nachstehend im einzelnen erläuterte Annäherungen bestimmt. Hierzu erfolgt vorzugsweise für jeden Wechselrichtertyp eine Parametrierung während der ersten Inbetriebnahme.

Für *IGBT-Stromrichter* werden die spannungsabhängigen und/oder stromabhängigen Kommutierungsverzugszeiten, nämlich die Einschaltverzugszeit txds_ON und die Ausschaltverzugszeit txds_OFF wie folgt angenähert:

Für die Einschaltverzugszeit txds_ON gilt:

$$\text{txds\_ON} = \text{Kds\_ON} = \text{konstant} \qquad (1)$$

wobei Kds_ON eine parametrierbare Einschaltverzugszeit ist.

Für die Bestimmung der Ausschaltverzugszeit txds_OFF_I sind zunächst die in Fig. 9 gezeigten, für IGBT-Stromrichter zutreffenden Stromabhängigkeiten zu berücksichtigen.

In Fig. 9 ist eine typische Stromabhängigkeit der Ausschaltverzugszeit txds_OFF_I im einzelnen dargestellt. Die Ausschaltverzugszeit txds_OFF_I bewegt sich im Bereich zwischen dem bei einem ersten parametrierbaren Stromgrenzwert K_LIM_1 des Phasenstromes auftretenden minimalen Wert Kds_OFF_1 (siehe Punkt P1) und dem bei einem Phasenstrom von Null auftretenden maximalen Wert Kds_OFF_MAX. Im Bereich zwischen diesen beiden parametrierbaren Werten ist die interessierende Ausschaltverzugszeit/Phasenstrom-Abhängigkeit aus zwei geraden Abschnitten von unterschiedlichen Steigungen zusammengesetzt, wobei der Knick beim Punkt P2 dieser derart gebildeten Kurve beim zweiten, parametrierbaren Stromgrenzwert K_LIM_2 für den Phasenstrom und der hierzu korrespondierenden, parametrierbaren Ausschaltverzugszeit Kds_OFF_2 liegt. Bei einem Phasenstrom über dem Wert K_LIM_1 bleibt die Ausschaltverzugszeit konstant auf ihrem minimalen Wert.

Gemäß Fig. 9 gilt für die drei Strombereiche:

für den oberen Strombereich I iphx I $\geq$ K_LIM_1:

$$\text{txds\_OFF\_I} = \text{Kds\_OFF\_1} \qquad (2)$$

für den mittleren Strombereich K_LIM_2 $\leq$ I iphx I $<$ K_LIM_1:

$$\text{txds\_OFF\_I} = \text{Kds\_OFF\_1} + \text{K\_SLOPE\_1}(\text{K\_LIM\_1 - I iphx I}) \qquad (3)$$

und für den unteren Strombereich I iphx I $<$ K_LIM_2:

$$\text{txds\_OFF\_I} = \text{Kds\_OFF\_2} + \text{K\_SLOPE\_2}(\text{K\_LIM\_2 - I iphx I}) \qquad (4)$$

wobei K_LIM_1 der erste, parametrierbarer Stromgrenzwert zur Trennung eines mittleren von einem oberen Strombereich, K_LIM_2 der zweite, parametrierbare Stromgrenzwert zur Trennung eines mittleren von einem unteren Strombereich, Kds_OFF_1 bzw. Kds_OFF_2 zu den Stromgrenzwerten K_LIM_1 bzw. K_LIM_2 korrespondierende, parametrierbare Ausschaltverzugszeiten und K_SLOPE_1 bzw. K_SLOPE_2 parametrierbare Steigungen der beiden zusammengesetzten Geraden zur Beschreibung der Ausschaltverzugszeit/Phasenstrom-Abhängigkeit im mittleren, zwischen den Punkten P1 und P2 befindlichen bzw. im unteren, zwischen dem Punkt P2 und der Ordinate befindlichen Strombereich darstellen.

Anschließend sind die eventuellen zusätzlichen Spannungsabhängigkeiten der Ausschaltverzugszeit zu berücksichtigen, was zur Ausschaltverzugszeit txds_OFF führt. Es gilt:

$$\text{txds\_OFF} = \text{K\_U} \cdot \frac{\text{Ud}}{\text{Udo}} \cdot \text{txds\_OFF\_I} \qquad (5)$$

wobei K_U eine parametrierbare, der Zwischenkreisspannung Ud zugeordnete Konstante und Udo die Nennzwischenkreisspannung darstellen.

Falls keine Spannungsabhängigkeiten zu berücksichtigen sind, entfällt die vorstehende Betrachtung und es gilt:

$$\text{txds\_OFF} = \text{txds\_OFF\_I} \qquad (6)$$

Daraufhin ist die Ausschaltverzugszeit txds_OFF auf die parametrierbare, maximale Ausschaltverzugszeit Kds_OFF_MAX zu begrenzen und es gilt:

$$\text{Kds\_OFF\_MAX} = \text{K\_tpi} + \text{Kds\_ON} \qquad (7)$$

wobei K_tpi eine parametrierbare, der Wechselsperrzeit tpi zugeordnete Konstante darstellt.

Für *GTO-Stromrichter* mit Beschaltungsnetzwerk können die spannungsabhängigen und/oder stromabhängigen Kommutierungsverzugszeiten, nämlich die Einschaltverzugszeit txds_ON und die Ausschaltverzugszeit txds_OFF wie folgt angenähert werden:

Für die Einschaltverzugszeit txds_ON gilt wiederum:

$$\text{txds\_ON} = \text{Kds\_ON} = \text{konstant} \qquad (8)$$

Für die Ausschaltverzugszeit txds_OFF_I sind die Stromabhängigkeiten zu berücksichtigen. Es gilt:

$$\text{txds\_OFF\_I} = \text{tpi} \cdot \left(\frac{1}{2}\right)^{\frac{|\text{iphx}|}{I_{\text{BEZUG}}}} \qquad (9)$$

$$\text{mit dem Bezugsstrom } I_{\text{BEZUG}} = C_B \cdot \frac{Udo}{\text{tpi}} \qquad (10)$$

wobei $C_B$ die Beschaltungskapazität darstellt.

Erfindungsgemäß wird Gleichung *(9)* zur einfacheren Umsetzung innerhalb der Signalverarbeitungssoftware (Wechselrichtermodell) wie folgt approximiert:

$$\text{txds\_OFF\_I} = \text{tpi}\left(1 + \frac{|\text{iphx}|}{I_{\text{BEZUG}}} \cdot K_1 + \left(\frac{|\text{iphx}|}{I_{\text{BEZUG}}}\right)^2 \cdot K_2\right) \qquad (11)$$

wobei $K_1$ und $K_2$ parametrierbare Konstanten darstellen.

Anschließend sind für die Ausschaltverzugszeit bei GTO-Stromrichtern mit Beschaltungsnetzwerken gegebenenfalls die Spannungsabhängigkeiten gemäß vorstehend erläuterter Gleichung *(5)* zu berücksichtigen, was zu txds_OFF führt.

Daraufhin ist die Begrenzung gemäß Gleichung *(7)* durchzuführen.

In einem *dritten Schritt* des Verfahrensablaufes zur Bestimmung der Wechselrichter-Ausgangsspannung erfolgt eine Korrektur der eingelesenen Zählerstände (siehe hierzu Fig. 5 und 6 mit Erläuterungen), um den tatsächlichen Verlauf von uphx nachzubilden. Es wird anhand der eingelesenen Schaltzustände (Eingaberegister 13) festgestellt, ob ein Schaltvorgang (Einschaltvorgang oder Ausschaltvorgang) innerhalb der letzten Abtastperiode (ν,ν-1) erfolgt ist. Darüber hinaus wird die Strompolarität idealerweise zum Schaltaugenblick bestimmt. Bei einem Einschaltvorgang mit positiver Strompolarität erfolgt die Korrektur mit dem Term -(tpi+txds_ON) gemäß Gleichung A, bei einem Einschaltvorgang mit negativer Strompolarität erfolgt die Korrektur mit dem Term txds_OFF gemäß Gleichung B. Bei einem Ausschaltvorgang mit positiver Strompolarität erfolgt die Korrektur mit dem Term -txds_OFF gemäß Gleichung C und bei einem Ausschaltvorgang mit negativer Strompolarität erfolgt die Korrektur mit dem Term (tpi+txds_ON) gemäß Gleichung D.

Im Falle einer Überabtastung bei PWM gesteuerten Wechselrichtern (siehe Fig. 1a) bzw. Anwendungen gemäß Fig. 1b muß gegebenenfalls ein Übertrag des verbleibenden Korrekturwertes in die Berechnung der folgenden Abtastzeit erfolgen. Dieser Fall tritt immer dann ein, wenn die Schaltflanke des Schaltbefehls SC_Tx nahe am Abtastzeitpunkt liegt und die gemäß den obigen Ausführungen bestimmte Korrekturzeit zu einem Übertrag führt.

In einem *vierten Schritt* erfolgt die Bestimmung der idealen Wechselrichter-Ausgangsspannungen unter Berücksichtigung der aktuell vorliegenden Zählerstände und der vorstehend angegebenen Korrekturen und mit der Annahme idealer, verlustfreier Halbleiterventile .

In einem *fünften Schritt* werden die Spannungsabfälle der Halbleiterventile berücksichtigt, um die realen Wechselrichter-Ausgangsspannungen zu bilden. Der augenblickliche Spannungsabfall ist dabei entweder $U_{IGBT}$ bei leitendem IGBT oder UDIODE bei leitender Diode. Der durchschnittliche Spannungsabfall $\overline{U}_{phx\_vd}$ in einer Phase ist wie folgt zu ermitteln:

$$\overline{u}_{phx\_vd} = \begin{cases} -U_{DIODE} - z_{phx}(U_{IGBT} - U_{DIODE}) & \text{für} \quad i_{phx} > 0 \\ U_{IGBT} - z_{phx}(U_{IGBT} - U_{DIODE}) & \text{für} \quad i_{phx} < 0 \end{cases}$$

wobei zphx das augenblickliche Tastverhältnis der Wechselrichterphase x bezogen auf die Abtastzeit darstellt.

In einem *sechsten Schritt* erfolgt die Raumzeiger-Transformation der Wechselrichter-Ausgangsspannungen zum Ständerspannungsraumzeiger $\underline{u}s(\nu)$.

Neben der vorstehend erläuterten Grundform des erfindungsgemäßen Verfahrens sind mehrere Varianten möglich, die nachstehend an Hand der eingesetzten Einrichtungen beschrieben werden.

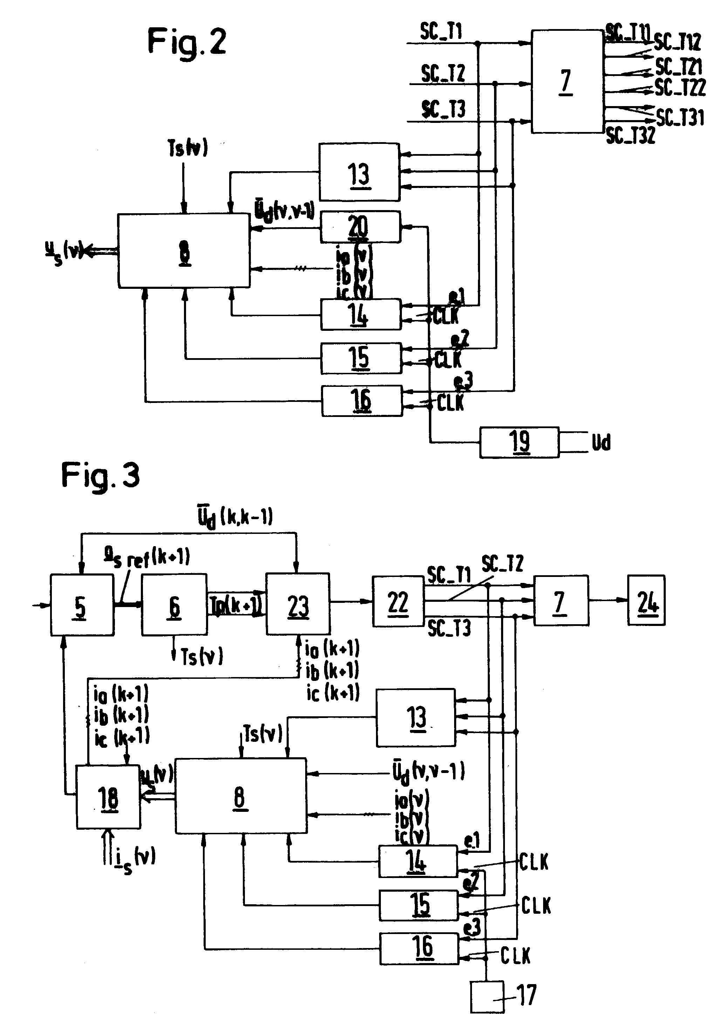

In Fig. 2 ist eine Anordnung mit präziser kontinuierlicher Berücksichtigung der Zwischenkreisspannung dargestellt. Bei dieser Anordnung entfällt im Vergleich zur Einrichtung gemäß den Fig. 1a und 1b der Mittelwertbildner 31. Die von der Spannungserfassungseinrichtung 9 ermittelte Zwischenkreisspannung Ud wird vielmehr einem spannungsgesteuerten Oszillator 19 zugeleitet, der die Frequenz der Taktpulse CLK in Abhängigkeit der Zwischenkreisspannung einstellt und den Zähler/Ausgaberegistern 14, 15, 16 sowie einem Zähler/Ausgaberegister 20 zuführt. Das Zähler/Ausgaberegister 20 leitet den gebildeten Mittelwert $\overline{U}d(\nu, \nu -1)$ dem Wechselrichtermodell 8 zu. Die übrige Anordnung ist wie unter Fig. 1 beschrieben.

Da bei diesem Verfahren mit einem spannungsgesteuerten Oszillator (VCO) ein mittelwertbildendes Meßverfahren benutzt wird, werden vorteilhaft Änderungen der Zwischenkreisspannung Ud kontinuierlich berücksichtigt (mittelwertbildende Hardware).

In Fig. 3 ist als weitere Variante eine Regeleinrichtung mit zusätzlicher Störgrößenaufschaltung dargestellt. Zusätzlich zur Anordnung gemäß Fig. 1 ist eine Störgrößenaufschaltung 23 vorgesehen, welche eingangsseitig Ständerphasenströme ia(k+1), ib(k+1), ic(k+1), den Mittelwert der Zwischenkreisspannung $\overline{U}d(k,k - 1)$, die Pulsperiode Tp (k+1) sowie Phasen-Schaltzeiten empfängt und ausgangsseitig korrigierte Phasen-Schaltzeiten an die Zählervergleichseinheiten 22 abgibt. Der Zählervergleichseinheit 22 nachgeschaltet ist die Schaltverriegelungslogik 7 mit Halbleiteransteuerung 24 (Gate Drive Units).

Wie in Fig. 3 zu erkennen ist, empfängt die Störgrößenaufschaltung 23 die Pulsperiode Tp(k+1) sowie die Phasen-Schaltzeiten von einem Pulsweitenmodulator 6, dem eingangsseitig der von einer Drehmoment/Fluß-Regelung 5 gebildete Aussteuerungs-Raumzeiger $\underline{a}sref(k+1)$ anliegt. Der Drehmoment/Fluß-Regelung 5 wird ebenfalls der Mittelwert der Zwischenkreisspannung $\overline{U}d(k,k - 1)$ zugeleitet.

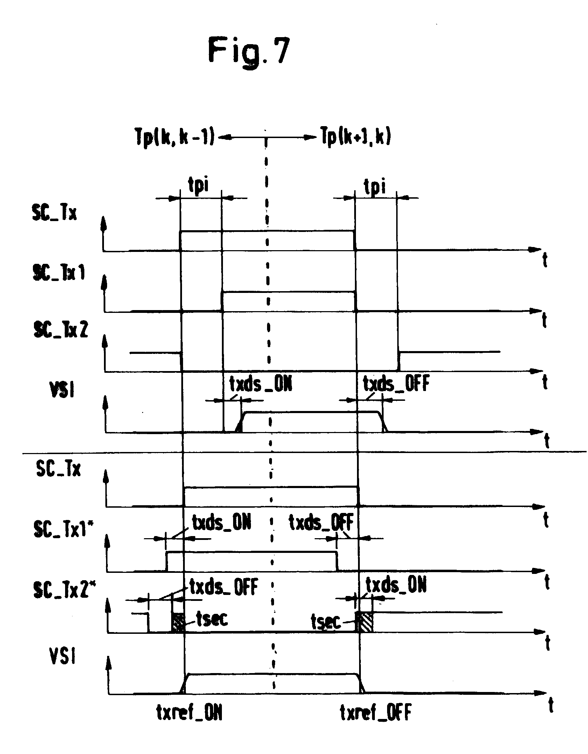

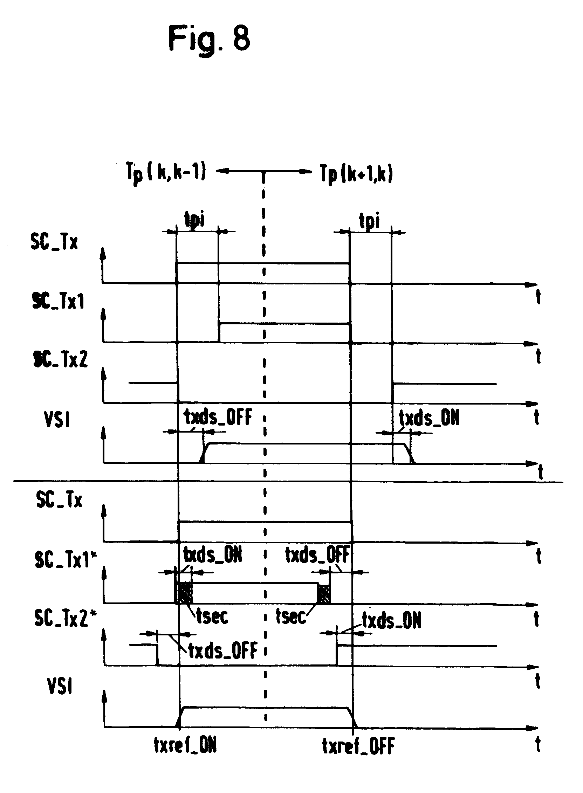

Mittels der Störgrößenaufschaltung 23 werden die vom Pulsweitenmodulator 6 vorgegebenen Wechselrichter-Schaltbefehle entsprechend den ermittelten Einschaltverzugszeiten txds_ON und Ausschaltverzugszeiten txds_OFF und der Wechselsperrzeit tpi unter Beachtung der vorstehenden Gleichungen A bis D bzw. G und H derart verschoben, daß die Spannungszeitfläche der tatsächlichen Wechselrichter-Ausgangsspannung der Sollspannung entspricht und keine durch Wechselsperrzeit und/oder Schaltzeit bedingte Phasenverschiebung aufweist. Fig. 7 zeigt dies für positiven und Fig. 8 für negativen Phasenstrom. Hierdurch wird die Oberschwingungsbelastung, insbesondere die 6. Harmonische im Drehmoment und im Zwischenkreisstrom, reduziert.

In den Fig. 7 und 8 ist jeweils in den oberen vier Diagrammen die Variante ohne Störgrößenaufschaltung und in den unteren vier Diagrammen die Variante mit Störgrößenaufschaltung gezeigt. Die Wechselrichter-Schaltbefehle der Variante mit Störgrößenaufschaltung sind mit SC_Tx1* und SC_Tx2* bezeichnet. Die Phasen-Ausgangspolarität ist mit VSI bezeichnet. Da die notwendige Sicherheitszeit tsec einen direkten Einfluß auf die sich einstellenden Fehlerspannungen hat, sollte sie so klein wie möglich sein (im allgemeinen gilt tsec < tpi). Als Referenzwerte werden Beginn und Ende der Wechselrichter-Schaltbefehle SC_Tx der Variante ohne Störgrößenaufschaltung herangezogen und mit txref_ON bzw. txref_OFF bezeichnet.

Bezugnehmend auf Fig. 7 gilt bei positivem Phasenstrom für den Einschaltvorgang

$$tx1\_ON = txref\_ON - txds\_ON$$

$$tx1\_OFF = txref\_ON - txds\_OFF - tsec$$

und für den Ausschaltvorgang

$$tx1\_OFF = txref\_OFF - txds\_OFF$$

$$tx1\_ON = txref\_OFF - txds\_ON + tsec.$$

Bezugnehmend auf Fig. 8 gilt bei negativem Phasenstrom für den Einschaltvorgang

$$tx1\_ON = txref\_ON - txds\_ON + tsec$$

$$tx1\_OFF = txref\_ON - txds\_OFF$$

und für den Ausschaltvorgang

$$tx1\_OFF = txref\_OFF - txds\_OFF - tsec$$

$$tx1\_ON = txref\_OFF - txds\_ON.$$

Bei Verzicht auf Überabtastung und damit vorteilhaft einzusetzender pulssynchroner Strommessung (Abtastung der Strangströme in der Mitte des Nullspannungszeigers) verbessert sich die Qualität der abzutastenden Stromgrundschwingung aufgrund der wiederhergestellten Symmetrie des Pulses (siehe hierzu Fig. 7 und 8).

Wie des weiteren in Fig. 3 zu erkennen ist, leitet das Wechselrichtermodell 8 den gebildeten Ständerspannungsraumzeiger $\underline{us}(v)$ einem Flußbeobachter 18 zu, dem als weitere Eingangsgrößen der Ständerstromraumzeiger $js(v)$ und die Abtastzeit $Ts(v)$ anliegen. Die Abtastzeit $Ts(v)$ wird vom Pulsweitenmodulator 6 vorgegeben. Der Flußbeobachter 18 bildet die der Störgrößenaufschaltung 23 zugeführten extrapolierten Ständerphasenströme $ia(k+1)$, $ib(k+1)$, $ic(k+1)$. Die übrige Anordnung ist wie unter Fig. 1a, 1b beschrieben.

Als Eingangsgrößen werden der Drehmoment/Fluß-Regelung 5 beispielsweise der Drehmoment-Sollwert und der Fluß-Sollwert zugeleitet. Für die Drehmoment/Fluß-Regelung 5 können eine Vielzahl von allgemein bekannten Regelungen eingesetzt werden. Wird für die Drehmoment/Fluß-Regelung 5 beispielsweise eine rotorflußorientierte Regelung eingesetzt, werden vom Flußbeobachter 18 der Istwert des Rotorflußbetrages, die rotorflußorientierten Stromkomponenten und der Transformationswinkel zwischen Rotorfluß und Statorkoordinatensystem gebildet und der Drehmoment/Fluß-Regelung 5 zugeleitet. Wird für die Drehmoment/Fluß-Regelung 5 beispielsweise eine ISR-Regelung (Indirekte Selbst-Regelung) eingesetzt, werden vom Flußbeobachter 18 der Drehmoment-Istwert, der Betrag des Statorfluß-Istwertes, der Istwert des Statorfluß-Raumzeigers und die Stromistwerte gebildet und der Drehmoment/Fluß-Regelung 5 zugeleitet.

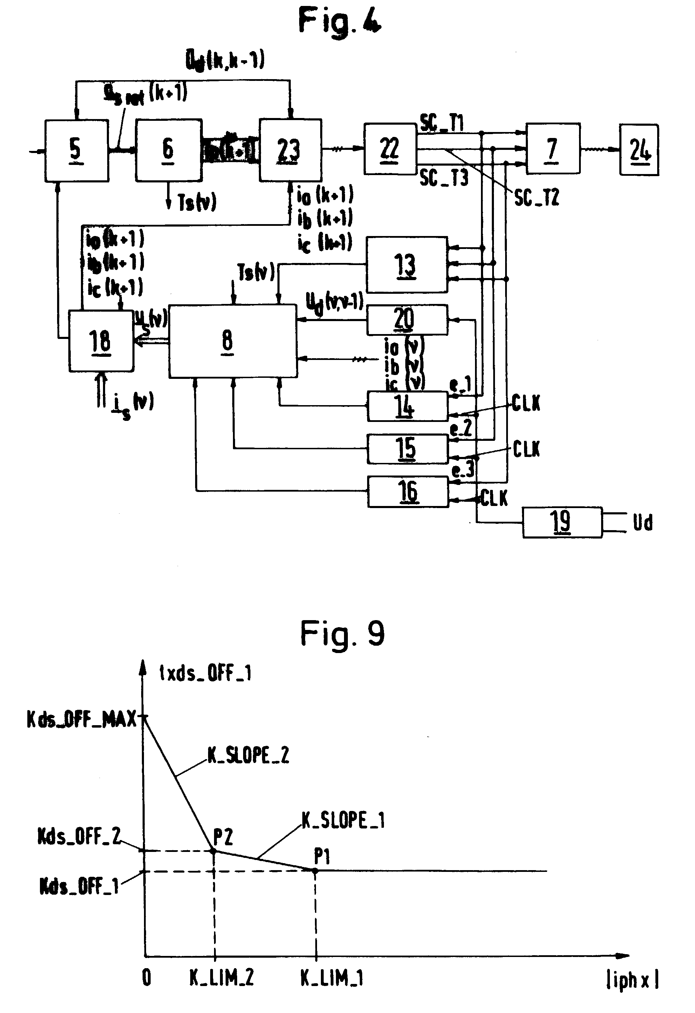

In Fig. 4 ist eine Regeleinrichtung mit präziser Berücksichtigung der Zwischenkreisspannung und zusätzlicher Störgrößenaufschaltung dargestellt. Diese Anordnung entspricht in wesentlichen Teilen der Anordnung gemäß Fig. 3, wobei jedoch der Mittelwertbildner 31 (siehe Fig. 1) entfällt und die von der Spannungserfassungseinrichtung 9 ermittelte Zwischenkreisspannung $U_d$ dem spannungsgesteuerten Oszillator 19 zugeleitet wird, der die Frequenz der Taktpulse CLK in Abhängigkeit der Zwischenkreisspannung einstellt, wie dies bereits unter Fig. 2 beschrieben ist. Die unter den Fig. 2 und 3 erläuterten Funktionsweisen addieren sich bei dieser Ausgestaltung.

**Patentansprüche**

1.    Verfahren zur indirekten Bestimmung der Ausgangsspannung eines über einen Gleichspannungszwischenkreis gespeisten und eine Induktionsmaschine versorgenden Zweipunkt-Wechselrichters, dadurch gekennzeichnet, daß

-    in einem ersten Schritt der augenblickliche Wechselrichterschaltzustand, die augenblicklichen Ständerphasenströme $(ia(v), ib(v), ic(v))$, der Mittelwert der Zwischenkreisspannung $(\bar{U}d(v, v-1))$ und die augenblickliche Dauer des EIN-Zustandes der Wechselrichter-Schaltbefehle (SC_Tx mit x=1, 2, 3) über die letzte Abtastzeit erfaßt werden,

- in einem zweiten Schritt eine Bestimmung der idealen Wechselrichter-Ausgangsspannung aus der Dauer der Wechselrichter-Schaltbefehle erfolgt, wobei die Wechselrichter-Schaltbefehle um die stromabhängigen und gegebenenfalls spannungsabhängigen Einschaltverzugszeiten und Ausschaltverzugszeiten (txds_ON, txds_OFF) korrigiert werden, was in Abhängigkeit davon erfolgt, ob es sich um einen Ein- oder Ausschaltvorgang handelt und ob zum Schaltaugenblick positive oder negative Strompolarität vorliegt,
- in einem dritten Schritt zur Ermittlung der realen Wechselrichter-Ausgangsspannung die Spannungsabfälle der Halbleiterventile des Wechselrichters berücksichtigt werden,
- in einem vierten Schritt eine Raumzeiger-Transformation der realen Wechselrichter-Ausgangsspannungen zum Ständerspannungsraumzeiger ($\underline{u}s(\nu)$) erfolgt.

2. Verfahren nach Anspruch 1, dadurch gekennzeichnet, daß zur Bildung der Einschalt- und Ausschaltverzugszeiten von IGBT-Halbleiterschaltern

a) als Einschaltverzugszeit txds_ON eine parametrierbare Einschaltverzugszeit Kds_ON vorgegeben wird,

b) zur Bestimmung der Ausschaltverzugszeit txds_OFF_l drei Strombereiche unterschieden werden, wobei im oberen Strombereich l iphx l $\geq$ K_LIM_1 gilt:

$$txds\_OFF\_l = Kds\_OFF\_1,$$

im mittleren Strombereich K_LIM_2 $\leq$ l iphx l $<$ K_LIM_1 gilt:

$$txds\_OFF\_l = Kds\_OFF\_1 + K\_SLOPE\_1(K\_LIM\_1 - l\ iphx\ l),$$

und im unteren Strombereich l iphx l $<$ K_LIM_2 gilt:

$$txds\_OFF\_l = Kds\_OFF\_2 + K\_SLOPE\_2(K\_LIM\_2 - l\ iphx\ l),$$

wobei iphx den Phasenstrom, K_LIM_1 einen parametrierbaren Stromgrenzwert zur Trennung eines mittleren von einem oberen Strombereich, K_LIM_2 einen parametrierbaren Stromgrenzwert zur Trennung des mittleren von einem unteren Strombereich, Kds_OFF_1 bzw. Kds_OFF_2 zu K_LIM_1 bzw. K_LIM_2 korrespondierende, parametrierbare Ausschaltverzugszeiten und K_SLOPE_1 bzw. K_SLOPE_2 parametrierbare Steigungen von zusammengesetzten Geraden im mittleren bzw. unteren Strombereich darstellen.

3. Verfahren nach Anspruch 1, dadurch gekennzeichnet, daß zur Bildung der Einschalt- und Ausschaltverzugszeiten von GTO-Halbleiterschaltern mit Beschaltungsnetzwerken

a) als Einschaltverzugszeit txds_ON eine parametrierbare Einschaltverzugszeit Kds_ON vorgegeben wird,

b) die Bestimmung der Ausschaltverzugszeit txds_OFF_l wie folgt geschieht:

$$txds\_OFF\_l = tpi \cdot \left(\frac{1}{2}\right)^{\frac{l\,iphx\,l}{I_{BEZUG}}}$$

mit dem Bezugsstrom

$$I_{BEZUG} = C_B \cdot \frac{Udo}{tpi},$$

wobei iphx den Phasenstrom, Udo die Nennzwischenkreisspannung, tpi die Wechselsperrzeit und $C_B$ die Beschaltungskapazität darstellen.

4. Verfahren nach Anspruch 3, gekennzeichnet durch eine Approximation

$$txds\_OFF\_I = tpi(1 + \frac{|iphx|}{I_{BEZUG}} \cdot K_1 + (\frac{|iphx|}{I_{BEZUG}})^2 \cdot K_2),$$

wobei $K_1$ und $K_2$ parametrierbare Konstanten darstellen.

5. Verfahren nach einem der Ansprüche 2 bis 4, dadurch gekennzeichnet, daß zusätzlich die Spannungsabhängigkeit der Ausschaltverzugszeit txds_OFF gemäß

$$txds\_OFF = K\_U \cdot \frac{Ud}{Udo} \cdot txds\_OFF\_I$$

berücksichtigt wird, wobei Ud die Zwischenkreisspannung, Udo die Nennzwischenkreisspannung und K_U eine parametrierbare, der Zwischenkreisspannung zugeordnete Konstante darstellen.

6. Verfahren nach Anspruch 5, dadurch gekennzeichnet, daß die Ausschaltverzugszeit txds_OFF auf eine maximale, parametrierbare Ausschaltverzugszeit Kds_OFF_MAX begrenzt wird, wobei gilt:

$$Kds\_OFF\_MAX = K\_tpi + Kds\_ON$$

und K_tpi eine parametrierbare, der Wechselsperrzeit zugeordnete Konstante darstellt.

7. Verfahren nach einem der Ansprüche 1 bis 6 , dadurch gekennzeichnet, daß die Bildung des Mittelwertes der Zwischenkreisspannung ($\bar{U}d(\nu, \nu - 1)$ ) mittels eines Mittelwertbildners (31) erfolgt.

8. Verfahren nach einem der Ansprüche 1 bis 6, dadurch gekennzeichnet, daß die Bildung des Mittelwertes der Zwischenkreisspannung ($\bar{U}d(\nu, \nu - 1)$ ) mittels eines spannungsgesteuerten Oszillators (19) mit nachgeschaltetem Zähler/Ausgaberegister (20) erfolgt, wobei sich die Frequenz des Oszillators in Abhängigkeit der Zwischenkreisspannung einstellt.

9. Verfahren nach einem der Ansprüche 1 bis 8, dadurch gekennzeichnet, daß eine zusätzliche Störgrößenaufschaltung (23) vorgesehen ist, welche die Wechselrichter-Schaltbefehle (SC_Tx mit x=1, 2, 3) entsprechend den spannungsabhängigen und/oder stromabhängigen Kommutierungsverzugszeiten (txds_ON, txds_OFF) derart verschiebt, daß die Spannungszeitfläche der tatsächlichen Wechelrichter-Ausgangsspannung der Sollspannung entspricht.

Fig. 1a

$\overline{U}_d(v, v-1)$ ← [31] ← $U_d$ ← [9]

3
2

22
SC_T1
SC_T11
SC_T12
SC_T21
SC_T22
SC_T31
SC_T32

SC_T2

SC_T3

[18] ← $i_s(v)$

[5]

[7]

[1]

[13]

Ts(v)

$\overline{U}_d(v, v-1)$

[8]

$u_s(v)$

ie(v)
ib(v)
ic(v)

e1

[14] ← CLK

e2

[15] ← CLK

e3

[16] ← CLK

[17]

10
11
12

ia(v)
ib(v)
ic(v)

[4]

EP 0 945 956 A2

12

# Fig.1b

$\overline{u}_d(v,v-1) \leftarrow$ | 31 | $\leftarrow u_d \leftarrow$ | 9 |

3

2

| 1 |

SC_T1

SC_T2

SC_T3

| 30 |

SC_T11
SC_T12
SC_T21
SC_T22
SC_T31
SC_T32

| 7 |

$i_s(v) \Rightarrow$ | 18 |

$T_s(v)$

| 13 |

$\overline{u}_d(v,v-1)$

$u_s(v) \Leftarrow$ | 8 |

$i_a(v)$
$i_b(v)$
$i_c(v)$

$i_a(v)$
$i_b(v)$
$i_c(v)$

10
11
12

| 4 |

e.1
| 14 | CLK

e.2
| 15 | CLK

e.3
| 16 | CLK

| |—17

EP 0 945 956 A2

Fig.2

Fig.3

# Fig. 4

# Fig. 9

## Fig.5

## Fig.6

EP 0 945 956 A2

# Fig. 7

$Tp(k, k-1) \longleftarrow \qquad \longrightarrow Tp(k+1, k)$

SC_Tx — tpi — tpi

SC_Tx1

SC_Tx2

VSI — txds_ON — txds_OFF

SC_Tx

SC_Tx1* — txds_ON — txds_OFF

SC_Tx2* — txds_OFF — txds_ON — tsec — tsec

VSI — txref_ON — txref_OFF

17

# Fig. 8